(19) Europäisches Patentamt
European Patent Office
Office européen des brevets

(11) Veröffentlichungsnummer: **0 096 250**
**B1**

(12) # EUROPÄISCHE PATENTSCHRIFT

(45) Veröffentlichungstag der Patentschrift: **11.02.87**

(51) Int. Cl.⁴: **C 08 G 18/10**, C 08 J 3/24, C 08 G 18/77, C 08 G 18/71

(21) Anmeldenummer: **83104891.3**

(22) Anmeldetag: **18.05.83**

(54) **Vernetzbare Harzmischungen.**

(30) Priorität: **03.06.82 DE 3220866**

(43) Veröffentlichungstag der Anmeldung:
**21.12.83 Patentblatt 83/51**

(45) Bekanntmachung des Hinweises auf die Patenterteilung:
**11.02.87 Patentblatt 87/07**

(84) Benannte Vertragsstaaten:
**AT BE CH DE FR GB IT LI LU NL SE**

(56) Entgegenhaltungen:
**EP-A-0 011 782**
**DE-A-2 307 794**
**FR-A-2 401 943**
**US-A-4 067 844**
**US-A-4 093 673**

(73) Patentinhaber: **DYNAMIT NOBEL AKTIENGESELLSCHAFT**
**Postfach 1209**
**D-5210 Troisdorf, Bez. Köln (DE)**

(72) Erfinder: **Huber, Hans, Dr.**
**Adenauerstrasse 32**
**D-5210 Troisdorf-Spich (DE)**
Erfinder: **Hänsel, Eduard, Dr.**
**Kölner Strasse 115**
**D-5210 Troisdorf (DE)**
Erfinder: **Geier, Gerhard**
**Bussardweg 1**
**D-5204 Lohmar (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 096 250 B1

**Beschreibung**

Gegenstand der vorliegenden Erfindung sind vernetzbare, bei Temperaturen unter 100°C flüssige Harzmischungen auf der Basis von hydroxylgruppenhaltigen Polymeren mit einem Molekulargewicht von 500 bis 20 000.

Es ist bekannt, daß Alkoxysilane mit Feuchtigkeit bereitwillig reagieren. Diese Bereitschaft zur Hydrolyse ist in überaus vielfältiger Weise ausnutzbar, wobei vor allem die haftungsvermittelnde Wirkung der Organosilane zwischen verschiedenartigen Materialien Erwähnung verdient (siehe "Handbook of Adhesives", 2nd Edition by Irving Skeist, S. 640 ff. von Nostrand Reinhold Co., 1977).

Die Hydrolyse der Alkoxysilane unter Ausbildung von Siloxan-Bindungen ist auch vielfcah zur Vernetzung von Polymeren eingesetzt worden. So wird in der DE—OS 23 14 757 ein Bindemittel beschrieben, das zu mindestens 50 Gew.-% aus einem Copolymerisat mit seitenständigen Alkoxysilangruppen besteht. Die US-Patentschrift 42 91 136 beschreibt ein mit Wasser härtbares, silanmodifiziertes Alkylen-Alkyl-acrylat Copolymeres. Solche Mischpolymerisate müssen jedoch entweder aus Lösung in organischen Lösungsmitteln oder mit für die Kunststoffverarbeitung gebräuchlichen Maschinen, wie Extrudern verarbeitet werden.

Es sind auch schon Versuche beschrieben worden, lösungsmittelfreie Flüssigpolymere herzustellen, die durch Zusatz von Wasser oder durch Reaktion mit Luftfeuchtigkeit vernetzen: Im US-Patent 36 32 557 wird von Flüssigpolymeren mit endständigen Hydroxylgruppen ausgegangen, die durch Reaktion mit überschüssigem Diisocyanat zu einem Polymeren mit endständigen Isocyanatgruppen übergeführt werden. Diese wieder läßt man mit einem Aminosilan, vorzugsweise γ-Aminopropyltrimethoxysilan reagieren, so daß schließlich ein Flüssigpolymeres resultiert, das stöchiometrisch, d.h. quantitativ, mit Alkoxysilyl-Endgruppen versehen ist. Solche Flüssigpolymere härten mit Luftfeuchtigkeit zu gummiartigen Produkten aus, die jedoch mit einer Reihe von nachteiligen Eigenschaften behaftet sind, wie z.B. in der US—Patentshcrift 39 71 751 sehr ausführlich beschrieben ist. Insbesondere die geringe Reißdehnung und vor allem die extrem schlechte Weiterreißfestigkeit ist ein gravierender Nachteil und findet sich in mehr oder weniger starkem Ausmaß bei allen solchen Materiliaen, die stöchiometrisch mit Alkoxysilylgruppen terminiert sind. Dies gilt in gleicher Weise für die in den US-Patentschriften 39 79 344 und 42 22 925 beschriebenen Produkte. Durch die in der US-Patentschrift 39 71 751 beschriebene Verfahrensweise wird dieser Nachteil zwar weitgehend behoben; das beschriebene Verfahren ist jedoch so aufwendig, daß die dort beschriebenen Ergebnisse auf andere Weise besser und vor allem weniger aufwendig erzielt werden können.

Die Reaktivität von Alkoxysilanen mit den Hydroxylgruppen von OH-haltigen Polymeren anstatt mit Wasser wird in dem Verfahren ausgenutzt, das der Jap. PS 56084751 zugrundeliegt: Flüssigpolymere mit endständigen OH-Gruppen werden mit Alkoxysilanen bei hoher Temperatur (150°C) und hohem Druck (150 bar) zu elastomeren Formteilen ausgehärtet. Dieses Verfahren ist nur unter Anwendung von Druck auszuführen, weil bei den Temperaturen, bei denen die Umesterung stattfindet, die eingesetzten Alkoxysilane sich sonst verflüchtigen würden und somit nicht wirksam werden können. Für Anwendungen, in denen das Material in dünner Schicht vorliegt, wie z.B. Beschichtungen aller Art, Lacke, Kleber etc. ist diese Technologie völlig unbrauchbar.

Der vorliegenden Erfindung liegt die Aufgabenstellung zugrunde, Gemische herzustellen, die bei Raumtemperatur oder nur mäßig erhöhter Temperatur (d.i. unter 100°C) in flüssigem Zustand verarbeitet, als Beschichtung aufgebracht und danach durch Vernetzung in einen Zustand wesentlich höherer Konsistenz überführt werden können. Der Einsatz von organischen Lösungsmitteln sollte dabei auf ein Minimum beschränkt sein oder besser ganz entfallen.

Es wurde nun gefunden, daß diese Aufgabe dann gelöst werden kann, wenn man von hydroxylgruppenhaltigen fließfähigen Polymeren ausgeht und die Hydroxylgruppen nicht quantitativ sondern nur partiell, d.h. also in weniger als stöchiometrischem Verhältnis durch Alkoxysilyl-Endgruppen ersetzt, wobei aber die Alkoxysilane durch chemische Bindung mit dem Polymeren verbunden sind. Gegenstand der vorliegenden Erfindung sind demzufolge vernetzbare, bei Temperaturen unter 100°C flüssige Harzmischungen auf der Basis von hydroxylgruppenhaltigen Polymeren mit einem Molekulargewicht von 500 bis 20 000, vorzugsweise 1000 bis 10 000, die durch die im Anspruch 1 genannten Bedingungen gekennzeichnet sind.

Das erfindungsgemäße Gemisch enthält demzufolge sowohl Hydroxylgruppen, als auch Alkoxysilyl-Endgruppen, härtet sowohl mit Feuchtigkeit als auch durch Wärmeeinwirkung aus, wobei die Härtungsbedingungen als auch die Eigenschaften des Endproduktes durch entsprechende Wahl der Ausgangsprodukte über einen sehr weiten Bereich variabel sind. Gemeinsam ist lediglich allen Produkten, daß der Vernetzungsgrad des Endproduktes über den Silangehalt nach Wunsch abgestimmt werden kann, ohne daß es zu Unverträglichkeitserscheinungen zwischen vernetzenden und nicht reagierenden Polymermolekülen kommt.

Die Durchführung der Erfindung kann in vielfältiger Weise erfolgen. Prinzipiell dient ein hydroxylgruppenhaltiges Polymeres, das bei Raumtemperatur oder mäßig erhöhter Temperatur (unter 100°C) in flüssigem Zustand vorliegt, als Ausgangsmaterial. Besonders geeignet sind Polyesterpolyole, Polyetherpolyole, Polyetheresterpolyole, funktionelle Glyceride und Partialglyceride (z.B. Rizinusöl oder

Rizinusmonodiglycerid), oder auch hydroxylgruppenhaltige Polybutadiene und Poly(meth)-acrylsäureester Copolymere.

Sinngemäß ist das Molekulargewicht der Ausgangsprodukte unter 20 000, in der Mehrzahl der Fälle unter 10 000. Lediglich bei Poly(meth)-acrylsäureester Copolymeren können auch noch Produkte mit einem Molekulargewicht bis zu 30 000 eingesetzt werden.

Die Einführung der Alkoxysilane in die Polymermoleküle kann auf verschiedene Weise erfolgen. Eine vorteilhafte Durchführungsform besteht in der Reaktion der genannten Polymeren mit Diisocyanaten und solchen organofunktionellen Silanen, die zur Reaktion mit Isocyanaten befähigt sind, wobei je eine NCO-Gruppe mit dem Silan und mit einer OH-Gruppe des Polymeren reagiert. Hierfür geeignet sind vor allem Aminosilanester, aber auch Mercaptosilanester und andere mit ausreichend reaktiven Wasserstoffen. Die Reaktionsfolge ist nicht entscheidend, es muß lediglich darauf geachtet werden, daß kein unbeabsichtigter Molekulargewichtsaufbau erfolgt. Es sind also die folgenden Reaktionsabläufe alternativ möglich:

A. Stufe 1: 1 Mol organofunktionelles Silan+1 Mol Diisocyanat
   Stufe 2: OH-haltiges Polymeres oder Polymermischung+Addukt aus Stufe 1 in solcher Menge, daß das Verhältnis OH:NCO kleiner als 1:0,9 ist.

B. Stufe 1: OH-haltiges Polymeres+Diisocyanat, wobei man, zur Vermeidung eines unerwünschten Molekulargewichtsaufbaus ein Molverhältnis von NCO:OH von nahe an 2:1 wählen wird.
   Stufe 2: Umsetzung dieses Prepolymeren aus Stufe 1 mit stöchiometrischer Menge eines oben genannten organofunktionellen Silanesters.
   Stufe 3: Mischung von Produkt aus Stufe 2 mit OH-haltigen Polymeren, so daß das Verhältnis OH:Alkoxysilylgruppen 0,9 ist. Das hierfür eingesetzte Polymere kann sowohl Ausgangsprodukt aus Stufe 1 wie auch ein anderes, damit verträgliches Polymeres der oben genannten Gruppe sein.

Als Diisocyanate eignen sich prinzipiell alle bekannten und marktgängigen monomeren oder polymeren Diisocyanate, wobei durch den Einsatz eines polymeren Diisocyanats in Ablauf B die Stufe 1 entfallen kann.

Auch der Einsatz von Triisocyanaten ist prinzipiell möglich. Bei ihrer Verwendung muß lediglich darauf geachtet werden, daß keine ungewünschte Molekulargewichtserhöhung eintritt.

Als organofunktionelle Silane sind Aminosilanester der allgemeinen Formel

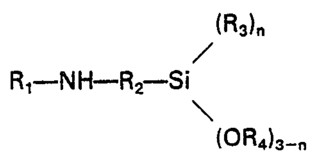

$R_1$=H oder Alkyl, Cycloalkyl, Aryl, Aralkyl oder der Rest

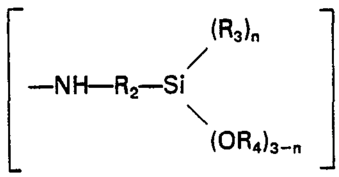

$R_2=C_1—C_5$ Alkylen
$R_3$=Methyl oder Ethyl
$R_4$=Alkyl oder Alkoxyalkylen mit bis zu 5 C-Atomen
n=0 oder 1 oder 2

geeignet, wobei besonders solche mit nur einer—vorzugsweise sekundären—Aminogruppe in Frage kommen. Als Beispiele seien genannt:

γ-Aminopropyltrimethoxysilan
γ-Aminopropyltriethoxysilan
N-Methyl-γ-Aminopropyltrimethoxysilan
N-Cyclohexyl-γ-Aminopropyltrimethoxysilan
N-n-Octyl-γ-Aminopropyltrimethoxysilan
N-Phenyl-γ-Aminopropyltrimethoxysilan
Di-[1-Propyl-3-(trimethoxysilyl)]-amin
N-Methyl-γ-Aminopropylmethyl-dimethoxysilan.

Auch Mercaptosilanester der Formel

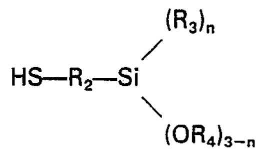

in der $R_2$, $R_3$ und $R_4$ die oben genannten Bedeutung haben, wie z.B.

γ-Mercaptopropyltrimethoxysilan
γ-Mercaptopropyltriethoxysilan

sind für die Ausführung der Erfindung brauchbar.

Außer Methoxy- und Ethoxysilanen sind auch andere Alkoxysubstituenten, insbesondere die Monomethylether von Glykolen wie Ethylen- oder Diethylenglykol etc. einsetzbar.

Die Aushärtung der Produkte nach erfolgtem Auftrag kann in vielfältiger Weise erfolgen:

Für Vernetzung durch Hydrolyse ist es besonders vorteilhaft, daß bei Beschichtungen naturgemäß eine große Oberfläche gebildet wird, wenn ein Material in dünner Schicht aufgetragen wird. Dementsprechend erfolgt die Vernetzung schon bei Raumtemperatur mit Luftfeuchtigkeit. Eine wesentliche Beschleunigung läßt sich durch geeignete und aus der Literatur bekannte Hydrolysekatalysatoren wie Zinn-, Titanverbindungen oder Aminen erzielen. Besonders wirksam ist kurze Behandlung mit Heißdampf.

Die Vernetzung durch Temperaturanwendung beginnt bei ca. 100°C einzusetzen und läuft bei Temperaturen über 120°C rasch ab. Sie wird ebenfalls durch geeignete Katalysatoren, wie z.B. Dibutylzinndilaurat oder andere, bekannte Umesterungskatalysatoren beschleunigt. Ebenfalls hilfreich ist ein Abführen der dabei gebildeten niedrigen Alkohole aus dem Gleichgewicht, soweit dies nicht, wie bei dünnschichtigem Auftrag naturgemäß leicht von selbst geschieht.

Während dies bei Hydrolysehärtung nicht vorteilhaft ist, können bei thermischer Härtung auch niedermolekulare Di- oder Polyole als Kettenverlängerer eingesetzt werden.

Wie bereits oben gesagt, ist die Wahl des Molverhältnisses von Hydroxylgruppen zu Alkoxysilylgruppierungen über sehr weite Grenzen variabel: Bei Hydrolysehärtung sollte lediglich eine Übervernetzung vermieden werden, um die eingangs erwähnten Nachteile zu vermeiden. Man wird daher in der Praxis ein Molverhältnis von OH zu Alkoxysilylgruppen von 1,0 zu $\leq$0,9 wählen, d.h. die Hydroxylgruppen der Polymeren sind mindestens zu 5 Mol.-% und zu nicht mehr als 90 Mol.-% durch Alkoxysilylgruppen ersetzt. Für die thermische Härtung kann man davon ausgehen, daß ein Trialkoxysilan mit bis zu drei Hydroxylgruppen reagieren kann, während beispielsweise ein Dialkoxyalkylsilan nur mit bis zu zwei Hydroxylgruppen reagieren kann. Dem Fachmann wird es daher nicht schwerfallen, den gewünschten Vernetzungsgrad einzustellen. Generell wird man somit auch für die thermische Härtung ein Molverhältnis von Hydroxyl zu Alkoxysilylgruppen von 1:0,9 oder weniger wählen.

Selbstverständlich können die erfindungsgemäßen Produkte mit geeigneten inerten Verdünnungsmitteln wie Lösungsmittel Weichmacher, Pigmenten und Füllstoffen versehen werden, sofern diese ausreichend geringen Feuchtigkeitsgehalt besitzen, so daß die Lagerstabilität der Zubereitungen nicht in unerwünschter Weise beeinträchtigt wird.

Als Verwendung für die herzustellenden Produkte sind Kleber insbesondere Schmelzhaftkleber und Strukturkleber sowie Beschichtungen wie Kalt- oder Heißsiegelbeschichtungen und Lacke, vor allem die sogenannten High Solid Lacke, vorgesehen. Die neuen Harzmischungen lassen sich auch als Kaschierkleber einsetzen.

Im einzelnen wird die Ausführung der Erfindung in den nachfolgenden Beispielen eingehend beschrieben.

Beispiele:

A. Eingesetzte Komponenten

1. Polyester

Aus den folgend angegebenen Dicarbonsäuren bzw. Glykolen wurden die folgenden Polyester hergestellt:

| Zusammensetzung: (Mol %) | PES 1 | PES 2 | PES 3 | PES 4 |
|---|---|---|---|---|
| Terephthalsäure | — | — | 35 | — |
| Isophthalsäure | — | — | 35 | — |
| Orthophthalsäure | — | — | — | 79 |
| Adipinsäure | 100 | 100 | 30 | 21 |
| Ethylenglykol | 56 | 54 | — | 21 |
| Neopentylglykol | 14 | 14 | 83 | 79 |
| Hexandiol-1,6 | 30 | 29 | — | — |
| Trimethylolpropan | — | 3 | 17 | — |
| Eigenschaften: | | | | |
| Glastemperatur, °C | −59 | −56 | +17 | +10 |
| Mol. Gew. | 2000 | ca. 3000 | 2000 | 1700 |
| OH-Zahl | 55 | 35 | 95 | 60 |

2. Polyester-Mischungen

Aus den unter 1. angeführten Polyestern wurden die folgenden Mischungen hergestellt:

| Zusammensetzung: (In Gew.-Teilen) | PES-M 1 | PES-M 2 | PES-M 3 |
|---|---|---|---|
| PES 1 | 100 | — | — |
| PES 2 | — | 100 | 40 |
| PES 3 | 100 | — | 100 |
| PES 4 | — | 25 | — |
| Eigenschaften: | | | |
| Glastemp., °C | −38 | −49 | −16 |
| OH-Zahl | 76 | 43 | 77 |
| Viskosität, mPa.S | | | |
| 25°C | 319,000 | 90,600 | 11,660,000 |
| 80°C | 3,150 | 2,790 | 22,800 |

3. Polyether

Aus der Vielzahl der kommerziell erhältlichen Polyether wurde ein von der BASF unter dem Markennamen "Luphen U 1220" vertriebenes Polyetherol eingesetzt. Dieses Produkt ist ein verzweigtes Polypropylenglykol mit einer Funktionalität von 3, OH-Zahl 32 bis 36 und einem mittleren Molekulargewicht von 4900.

4. Herstellung der Härter

Unter einem Härter wird im folgenden der Bestandteil des Harzes verstanden, der die Alkoxysilyl-Endgruppe enthält.

4.1 Addukt aus 3-Isocyanatomethyl-3,5,5-trimethyl-cyclohexylisocyanat (auch Isophorondiisocyanat und im folgenden kurz IPDI genannt) und N - Methyl - γ - Aminopropyltrimethoxysilan (Härter 1)

In einem 1000 ml-Dreihalskolben mit Innenthermometer, Rührer und Tropftrichter wurden in trockener $N_2$-Atmosphäre 334 g IPDI und 75 g Witamol 600 (Polymerweichmacher auf Polyesterbasis; Mol. Gew. 492;

OH-Zahl≤10; Hersteller: Dynamit Nobel AG) vorgelegt. Der Inhalt des Kolbens wurde mit einem Eisbad gekühlt und das Aminosilan so langsam zutropfen gelassen, daß die Temperatur des Kolbeninhalts nicht über 40°C angstieg.

Nach Zugabe der gesamten Menge von 290 g wurde noch 10 Minuten weitergerührt und dann nach DIN 53 185 der NCO-Gehalt titrimetrisch bestimmt.

Theorie: 9,05% NCO Gefunden: 9.1 bis 9.3%.

Das erhaltene Produkt ist eine unter Feuchtigskeitsausschluß lagerstabile, farblose Flüssigkeit mit einer Viskosität von 3.730 mPa.sek bei 25°C.

4.2 Addukt aus IPDI und N - Methyl - γ - Aminopropylmethyl - dimethoxysilan (Härter 2)

Dieses Produkt wurde in völlig analoger Weise wie unter 4.1 beschrieben hergestellt und ist ebenfalls unter Feuchtigkeitsausschluß lagerstabil.

NCO-Gehalt: 9.40% theor. 9,5% gefunden.

4.3 Addukt aus IPDI und N - Cyclohexyl - γ - Aminopropyltrimethoxysilan (Härter 3)

Auch dieses Addukt ist nach obiger Methode herstellbar und unter Feuchtigkeitsausschluß lagerstabil.

NCO-Gehalt: 8,7% theor. 8,7% gefunden.

4.4 Addukt aus IPDI und N - n - Octyl - γ - Aminopropyltrimethoxysilan (Härter 4)

Dieses Addukt ist ebenfalls analog 4.1 herstellbar und unter Feuchtigkeitsausschluß lagerstabil.

NCO-Gehalt: 7,45% theor. 7,2% gefunden.

4.5 Addukt aus Toluyldi-isocyanat (TDI) und N - Methyl - γ - Aminopropyltrimethoxysilan (Härter 5)

Dieses Addukt wurde nur aus den obigen Komponenten, ohne Verdünnung durch Polymerweichmacher hergestellt. Es ist selbst bei Feuchtigkeitsausschluß höchstens wenige Tage haltbar und wurde unmittelbar nach der Herstellung mit einer der oben beschriebenen hydroxylgruppenhaltigen Polymermischungen umgesetzt.

NCO-Gehalt: 11,44% theor. 11,5% gefunden.

4.6 Addukt aus Methylen-bis-phenylisocyanat (MDI) und N - Methyl - γ - Aminopropyltrimethoxysilan (Härter 6)

Dieses Addukt wurde analog 4.5 ohne Weichmacher hergestellt. Es ist ebenfalls nicht lagerstabil und wurde sofort weiter analog 4.5 umgesetzt.

NCO-Gehalt: 9,5% theor. 9,6% gefunden.

4.7 Addukt aus PES 1 und Härter 1 (Härter 7)

In einem 1000 ml-Dreihalskolben mit Innenthermometer, Rühren und Tropftricher wurden in trockener $N_2$-Atmosphäre 500 g (d.s. ca. 0,25 Mol) PES 1 und 0,2 ml Dibutylzinndilaurat (DBTL) vorgelegt und auf 70°C erwärmt. Unter Rühren wurden 285 g (ca. 0,6 Mol) Härter 1 zugetropft und der Fortgang der Reaktion titrimetrisch (NCO-Titration nach DIN 53 185) verfolgt.

Nach ca. 3 Stunden war der NCO-Gehalt auf 0,49% zurückgegangen und keine freien Hydroxylgruppen mehr vorhanden und die Reaktion beendet.

Das auf diese Weise erhaltene Produkt ist farblos und bei Ausschluß von Luftfeuchtigkeit lagerstabil.

Viskosität bei 25°C ca. 600,000 mPa.S
80°C ca. 7,000 mPa.S.

4.8 Addukt aus PES 2 und Härter 1 (Härter 8)

Analog zu der unter Punkt 4.7 beschriebenen Verfahrensweise wurde aus 800 g PES 2, 0,2 ml DBTL und 250 g Härter 1 ein hydroxylgruppenfreies Addukt hergestellt. Dieses Produkt ist noch viskoser als Härter 7 und nur beschränkt lagerstabil.

4.9 Addukt aus IPDI und N - Methyl - γ - Aminopropyl - tris(methoxydiglykol) - silan (Härter 9)

Das Addukt wurde aus 33,3 g (0,15 Mol) IPDI, in 5,0 g Witamol 600 und 68,55 g (0,15 Mol) N - Methyl - γ - Aminopropyltris(methoxydiglykol) - silan analog der unter 4.1 beschriebenen Verfahrensweise hergestellt.

NCO-Gehalt: 6,0% theor. 6,3% gefunden.

4.10 Addukt aus IPDI und γ - Mercaptopropylsilan (Härter 10)

In einem 100 ml Erlenmeyerkolben wurden 22,2 g (0,1 Mol) IPDI und 0,1 g DBTL vorgelegt und auf ca. 60°C erwärmt. Unter Rühren mit Magnetrührer wurden in kleinen Portionen insgesamt 19,0 g (0,1 Mol) γ-Mercaptopropylsilan zugesetzt und insgesamt 3 Stunden reagieren gelassen.

NCO-Gehalt: 10,1% theor. 10,4% gefunden.

4.11 Addukt aus Methylen-bis-phenylisocyanat (MDI) und γ-Mercaptopropylsilan (Härter 11)

In einem 1000 ml Dreihalskolben mit Innenthermometer, Rührer und Tropftrichter wurden in trockener $N_2$-Atmosphäre 270 g eines MDI mit Äquivalentgew. 135 (statt des theoretischen Wertes für reines MDI von 125) vorgelegt, auf 70°C erwärmt und 190 g (1,0 Mol) γ-Mercaptopropylsilan zutropfen gelassen. Nach 2 Stunden war die Reaktion beendet.

Das Produkt ist nicht lagerstabil.

NCO-Gehalt: 7,9% theor. 6,6% gefunden.

4.12 Addukte aus Luphen U1220 (Polypropylenglykol; siehe Punkt 3) und Härter 1

Es wurden zwei Addukte hergestellt und zwar:

4.12.1 Molverhältnis Luphen U1220 zu Härter 1 (zum Vergleich) gleich 1:3, also stöchiometrisch vollständig.

120 g Luphen (0,0245 Mol)
34,3 g Härter 1 (0,0735 Mol).

4.12.2 Molverhältnis Luphen U1220 zu Härter 1 gleich 1:2

120 g Luphen (0,0245 Mol)
22,8 g Härter 1 (0,049 Mol).

Die Ansätze wurden jeweils in trockener $N_2$-Atmosphäre bei 70°C gefahren und mit 0,2 g DBTL katalysiert. Nach jeweils 2 Stunden Reaktionszeit war die Reaktion vollständig abgelaufen, so daß kein freies -NCO mehr nachweisbar war.

5. Beispiele zum Härtungsverhalten der erfindungsgemäßen Mischungen (Fig. 1 bis 3).

5.1 Einfluß der Temperatur auf das Härtungsverhalten

Die folgenden im vorhergehenden beschriebenen Komponenten wurden bei 80°C gemischt und die Viskositätzunahme bei verschiedenen Temperaturen in einem Rotationsviskosimeter, Typ Rheotron, (Platte-Kugel Kombination P10) gemessen:

| | |
|---|---|
| Polyestermischung PES-M 1 | 100 Gew.-Teile |
| Härter 1 | 5 Gew.-Teile |
| DBTL | 0,3 Gew.-Teile. |

Die Ergebnisse sind in Fig. 1 dargestellt und zeigen, daß diese Mischung bei 100°C einen nur kaum merklichen Viskositätsanstieg zeigt und dementsprechend bei dieser Temperatur noch gut verarbeitet werden kann.

Bei Temperaturen über 130°C läuft die Härtung rasch ab und ist bei Temperaturen über 120°C in wenigen Minuten abgeschlossen.

5.2 Einfluß der Härterkonzentration bei konstanter Temperatur auf das Viskositätsverhalten

In der gleichen Versuchsanordnung wie unter 5.1 beschrieben, wurde bei 130°C der Einfluß der Härtermenge untersucht, wobei auf 100 Gew.-Teile PES-M 1 und 1 Teil DBTL 3, 4, 5, 8 und 12 Teile Härter 1 eingesetzt wurden. Die Ergebnisse sind in Fig. 2 dargestellt.

5.3 Aushärtung durch Hydrolyse

2 Gew.-Teile der Polyester-Mischung PES-M 1 und 1 Gew.-Teil Härter 7 wurden bei 80°C in einem Brabender-Plastographen gemischt und die für die vollständige Hydrolyse des Härters 7 benötigte stöchiometrische Menge Wasser zugesetzt. In Fig. 3 ist der mit fortschreitender Hydrolyse verbundene Anstieg der Konsistenz dargestellt. Fig. 3 zeigt die Ergebnisse eines Knetversuchs auf dem Brabender-Plastographen (Temperatur: 80°C; Drehzhal: 80 Upm).

**Patentansprüche für die Vertragsstaaten: BE, CH, DE, FR, GB, IT, LI, LU, NL, SE**

1. Vernetzbare, bei Temperaturen unter 100°C flüssige Harzmischungen auf der Basis von hydroxylgruppenhaltigen Polymeren mit einem Molekulargewicht von 500—20 000, vorzugsweise 1000—10 000, dadurch gekennzeichnet, daß neben diesen hydroxylgruppenhaltigen Polymeren noch Polymere mit Urethansilylharnstoffgruppen enthalten sind, wobei der Gehalt des Harzgemisches an OH-Gruppen 10 bis 95 Mol-% und der Gehalt an Urethansilylharnstoffgruppen 5 bis 95 Mol-%, jeweils bezogen auf die Gesamtmenge dieser beiden Gruppen, beträgt und wobei die Urethansilylharnstoffgruppe der Formel

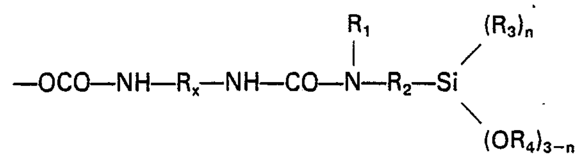

bzw.

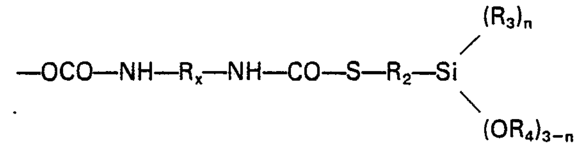

entspricht, in der $R_1$=H oder Alkyl, Cycloalkyl, Aryl, Aralkyl, $R_2$=C 1 bis C 5 Alkylen, $R_3$=Methyl oder Ethyl, $R_4$=Alkyl oder Alkoxialkylen mit 1 bis zu 6 C-Atomen, n=0 oder 1 oder 2 und $R_x$ der Rest eines monomeren oder polymeren Di- oder Triisocyanats bedeuten.

2. Harzgemische gemäß Anspruch 1, dadurch gekennzeichnet, daß das in dem Gemisch enthaltene Polymere mit Urethansilylharnstoffgruppen erhalten ist durch Umsetzung eines Diisocyanats mit einem organofunktionellen Silan der Formel

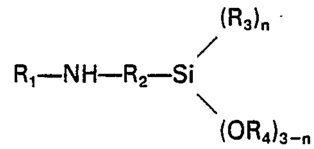

oder

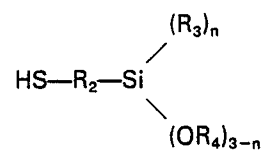

im Molverhältnis 1:1.

3. Vernetzbare Harzgemische gemäß Anspruch 1, dadurch gekennzeichnet, daß das urethansilylharnstoffgruppenhaltige Polymere hergestellt ist durch Umsetzung eines hydroxylgruppenhaltigen Polymeren mit einem Molekulargewicht von 500 bis 20 000 mit einem Di- oder Triisocyanat im Molverhältnis von NCO:OH von etwa 2:1 und anschließender Reaktion mit einem Organosilan der im Anspruch 2 genannten Formeln im stöchiometrischen Verhältnis der NCO-Gruppen zu dem organofunktionellen Silan.

4. Harzgemische gemäß einem der Ansprüche 1 bis 3, dadurch gekennzeichnet, daß das Verhältnis der Hydroxylgruppen zu den Alkoxisilylgruppen $\leqq 0,9$ ist.

5. Verfahren zum Aushärten der Gemische entsprechend einem der Ansprüche 1 bis 4, dadurch gekennzeichnet, daß man diese Gemische entweder mit Wasser bzw. Luftfeuchtigkeit reagieren läßt oder auf Temperaturen >100°C, vorzugsweise über 120°C erhitzt.

6. Verfahren zum Aushärten der Gemische gemäß Anspruch 5, dadurch gekennzeichnet, daß die Aushärtung in Gegenwart von Katalysatoren durchgeführt wird.

7. Verwendung von Gemischen gemäß einem der Ansprüche 1 bis 4 zur Herstellung von Beschichtungen.

8. Verwendung von Gemischen gemäß einem der Ansprüche 1 bis 4 als Kleber.

9. Verwendung von Gemischen gemäß einem der Ansprüche 1 bis 4 als Haftkleber.

10. Verwendung von Gemischen gemäß einem der Ansprüche 1 bis 4 zur Herstellung von Schmelzhaftklebern.

**Patentansprüche für den Vertragsstaat: AT**

1. Verfahren zur Herstellung von vernetzbaren, bei Temperaturen unterhalb 100°C flüssigen Harzmischungen mit einem Molgewicht von 500 bis 30000, dadurch gekennzeichnet, daß man hydroxylgruppenhaltige Polymere entweder

a) mit einem Diisocyanat im Molverhältnis NCO:OH von nahezu 2:1 umsetzt, das entstandene Reaktionsprodukt mit der, den freien NCO-Gruppen entsprechenden stöchiometrischen Menge eines Amino- oder Mercaptoalkoxysilans umsetzt und das Umsetzungsprodukt mit soviel OH-Gruppen enthaltenden Polymeren mischt, daß das Verhältnis OH:Alkoxysilylgruppen kleiner oder gleich 1:0,9 ist oder mit dem Additionsprodukt aus äquimolaren Mengen von Amino- oder Mercaptoalkoxysilanen mit Diisocyanaten in solcher Menge umsetzt, daß das Verhältnis OH:NCO kleiner oder gleich 1:0,9 ist.

2. Verfahren zur Vernetzung der gemäß Anspruch 1 hergestellten flüssigen Harzmischungen, dadurch gekennzeichnet, daß man die Harze gemäß Anspruch 1 mit einer für die vollständigen Hydrolyse der

Alkoxygruppen nötigen Menge Wasser versetzt und die dann eintretende Hydrolysereaktion bei Temperaturen über 20°C ablaufen läßt.

3. Verfahren gemäß Anspruch 2, dadurch gekennzeichnet, daß man die Hydrolyse in Gegenwart von Hydrolysekatalysatoren aus der Gruppe Zinn-Titanverbindungen oder Amine durchführt.

4. Verfahren zur Härtung der unter Anspruch 1 genannten Harzmischungen, dadurch gekennzeichnet, daß man die Mischungen auf Temperaturen über 100°C erhitzt.

**Revendications pour les Etats Contractants: BE, CH, DE, FR, GB, IT, LI, LU, NL, SE**

1. Mélanges de résines réticulables, liquides à des températures au-dessous de 100°C à base de polymères porteurs de groupes hydroxyles avec un poids moléculaire de 500 à 20 000, de préférence de 1000 à 10 000, caractérisés en ce que sont encore présents, à côté de ces polymères porteurs de groupes hydroxyles, des polymères avec des groupes uréthannesilylurée, la teneur du mélange de résines en groupes OH s'élevant à 10—95% molaire et la teneur en groupes uréthannesilylurée à 5—95% molaire, rapportés chaque fois à la quantité totale de ces deux groupes et le groupe uréthannesilylurée répondant à la formule:

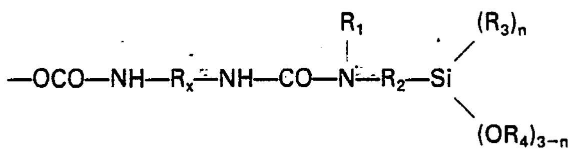

ou

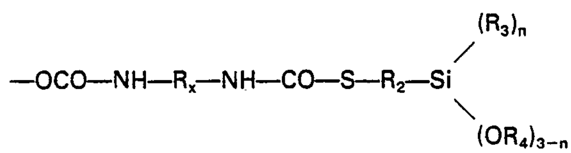

dans laquelle R représente H ou un alkyle, un cycloalkyle, un aryle, un aralkyle, $R_2$ un alkylène en $C_1$ à $C_5$, $R_3$ un méthyle, un éthyle, $R_4$ un alkyle ou un alcoxyalkylène avec 1 à 6 atomes de carbone, n=0, 1 ou 2 et $R_x$ représente le reste d'un di- ou d'un triisocyanate monomère ou polymère.

2. Mélanges de résines selon la revendication 1, caractérisés en ce que le polymère porteur de groupes uréthannesilylurée contenu dans le mélange est obtenu par réaction d'un diisocyanate avec un silane organofonctionnel de formule

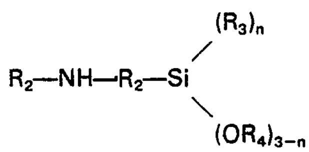

ou

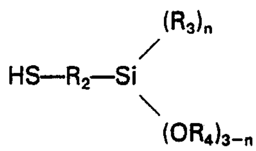

dans un rapport molaire de 1:1.

3. Mélanges de résines réticulables selon la revendication 1, caractérisés en ce que le polymère porteur de groupes uréthannesilylurée s'obtient par réaction d'un polymère hydroxylé d'un poids moléculaire de 500 à 20 000 avec un di- ou un triisocyanate dans un rapport molaire de NCO:OH d'environ 2:1 et réaction consécutive avec un organosilane répondant aux formules citées dans la revendication 2 dans un rapport stoechiométrique des groupes NCO au silane organofonctionnel.

4. Mélanges de résines selon une des revendications 1 à 3, caractérisés en ce que le rapport des groupes hydroxyles aux groupes alcoxysilyles est ≤0,9.

5. Procédé de durcissement des mélanges selon l'une des revendications 1 à 4, caractérisé en ce que ces mélanges sont mis à réagir avec de l'eau ou l'humidité de l'aire ou sont chauffés à des températures > à 100°C, de préférence au-dessus de 120°C.

6. Procédé de durcissement des mélanges selon la revendication 5, caractérisé en ce que le durcissement s'effectue en présence de catalyseurs.

7. Utilisation de mélanges selon une des revendications 1 à 4 pour la préparation de revêtements.

8. Utilisation de mélanges selon l'une des revendications 1 à 4 en tant que colles.

9. Utilisation de mélanges selon l'une des revendications 1 à 4 en tant que colles de contact.

10. Utilisation de mélanges selon l'une des revendications 1 à 4 pour la préparation de colles thermofusibles.

**Revendications pour l'Etat Contractant: AT**

1. Procédé de préparation de mélanges de résines réticulables, liquides à des températures au-dessous de 100°C d'un poids moléculaire de 500 à 30 000, caractérisé en ce qu'on fait réagir des polymères hydroxylés

a) soit avec un diisocyanate dans le rapport molaire NCO:OH d'a peu près 2:1, qu'on fait réagir le produit de réaction résultant avec la quantité stoechiométrique correspondant aux groupes NCO libres d'un amino- ou d'un mercaptoalcoxysilane et qu'on mélange le produit de réaction avc une quantité de polymères porteurs de groupes OH telle que le rapport molaire OH:groupes alcoxysilyles soit inférieur ou égal à 1:0,9,

b) soit avec le produit d'addition de quantités équimolaires d'amino- ou de mercaptoalcoxysilanes avec des diisocyanates en une quantité telle que le rapport OH:NCO soit inférieur ou égal à 1:0,9.

2. Procédé pour la réticulation des mélanges de résines liquides préparés selon la revendication 1, caractérisé en ce qu'on additionne les résines selon la revendication 1 de la quantité d'eau nécessaire à l'hydrolyse totale des groupes alcoxy et qu'on laisse ensuite se dérouler la réaction d'hydrolyse qui se produit à des températures au-dessus de 20°C.

3. Procédé selon la revendication 2, caractérisé en ce qu'on effectue l'hydrolyse en présence de catalyseurs d'hydrolyse du groupe des composés du zinc, du titane ou des amines.

4. Procédé pour le durcissement des mélanges de résines cités dans la revendication 1, caractérisé en ce qu'on chauffe les mélanges à des températures supérieures à 100°C.

**Claims for the Contracting States: BE, CH, DE, FR, GB, IT, LI, LU, NL, SE**

1. Crosslinkable resin mixtures liquid at temperatures below 100°C based on hydroxyl group containing polymers with a molecular weight of 500—20,000, preferably 1000—10,000, characterised in that, in addition to these hydroxyl containing polymers, there are contained further polymers with urethanesilylurea groups, with the content of the resin mixture with respect to OH groups amounting to 10 to 95 mol% and the content with respect to urethanesilylurea groups amounting to 5 to 95 mol%, respectively related to the total amount of these two groups, and with the urethanesilylurea groups corresponding to the formula

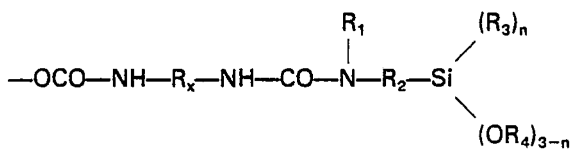

or

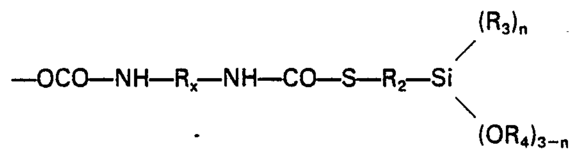

in which $R_1$=H or alkyl, cycloalkyl, aryl, aralkyl, $R_2$=$C_1$ to $C_5$ alkylene, $R_3$=methyl or ethyl, $R_4$=alkyl or alkoxyalkylene with 1 up to 6 C-atoms, n=0 or 1 or 2 and $R_x$ denotes the residue of a monomeric or polymeric di- or triisocyanate.

2. Resin mixtures according to claim 1, characterised in that the polymer with urethanesilylurea groups contained in the mixture is obtained by reaction of a diisocyanate with an organofunctional silane of the formula

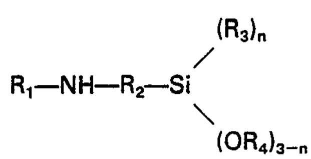

or

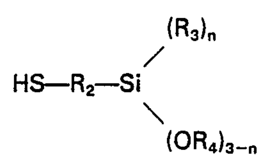

in the molar ratio 1:1.

3. Crosslinkable resin mixtures according to claim 1, characterised in that the urethanesilylurea group-containing polymer is produced by reaction of a hydroxyl group-containing polymer with a

molecular weight of 500 to 20,000 with a di- or triisocyanate in the molar ratio of NCO:OH of about 2:1 and then reaction with an organosilane of the formulae indicated in claim 2 in stoichiometric ratio of the NCO-group to the organofunctional silane.

4. Resin mixtures according to one of claims 1 to 3, characterised in that the ratio of the hydroxyl groups to the alkoxysilyl groups is $\leq 0.9$.

5. Process for the hardening of the mixtures corresponding to one of claims 1 to 4, characterised in that these mixtures are allowed to react either with water or atmospheric moisture or are heated to temperatures >100°C, preferably above 120°C.

6. Process for the hardening of the mixtures according to claim 5, characterised in that the hardening is carried out in the presence of catalysts.

7. Use of mixtures according to one of claims 1 to 4 for the production of coatings.

8. Use of mixtures according to one of claims 1 to 4 as adhesives.

9. Use of mixtures according to one of claims 1 to 4 as pressure sensitive adhesives.

10. Use of mixtures according to one of claims 1 to 4 for the production of hot melt adhesives.

**Claims for the Contracting State: AT**

1. Process for the production of crosslinkable resin mixtures liquid at temperatures below 100°C, with a molecular weight of 500 to 30,000, characterised in that hydroxyl group-containing polymers are reacted either:

a) with a diisocyanate in the molar ratio NCO:OH of approximately 2:1, the reaction product being produced is reacted with the stoichiometric amount of an amino- or mercapto-alkoxysilane corresponding to the free NCO-groups and the reaction product is mixed with so much OH-group containing polymers that the ratio OH:alkoxysilyl groups is less than or equal to 1:0.9, or

b) with the addition product of equimolar amounts of amino- or mercaptoalkoxy silanes with diisocyanates in such amounts that the ratio OH:NCO is less than or equal to 1:0.9.

2. Process for the cross-linking of the liquid resin mixtures produced according to claim 1, characterised in that the resins according to claim 1 are treated with an amount of water necessary for the complete hydrolysis of the alkoxy groups and the hydrolysis reaction then taking place is allowed to run its course at temperatures above 20°C.

3. Process according to claim 2, characterised in that the hydrolysis is carried out in the presence of hydrolysis catalysts from the group tin-titanium compounds or amines.

4. Process for the hardening of the resin mixtures indicated in claim 1, characterised in that the mixtures are heated at temperatures above 100°C.

Fig 1

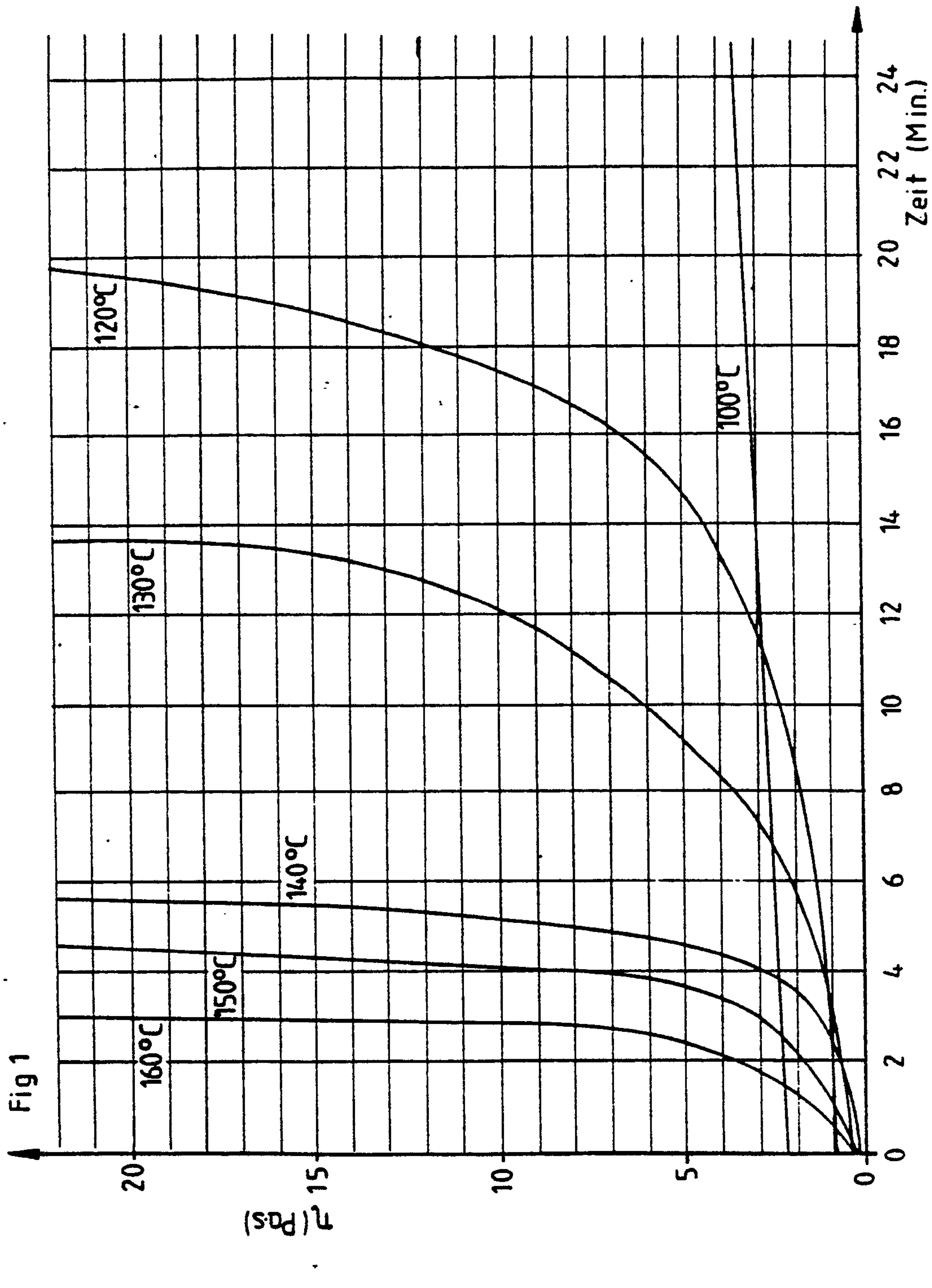
120°C
130°C
140°C
150°C
160°C
100°C
Zeit (Min.)
0
2
4
6
8
10
12
14
16
18
20
22
24
$\eta$ (Pa·s)
0
5
10
15
20

Fig. 2

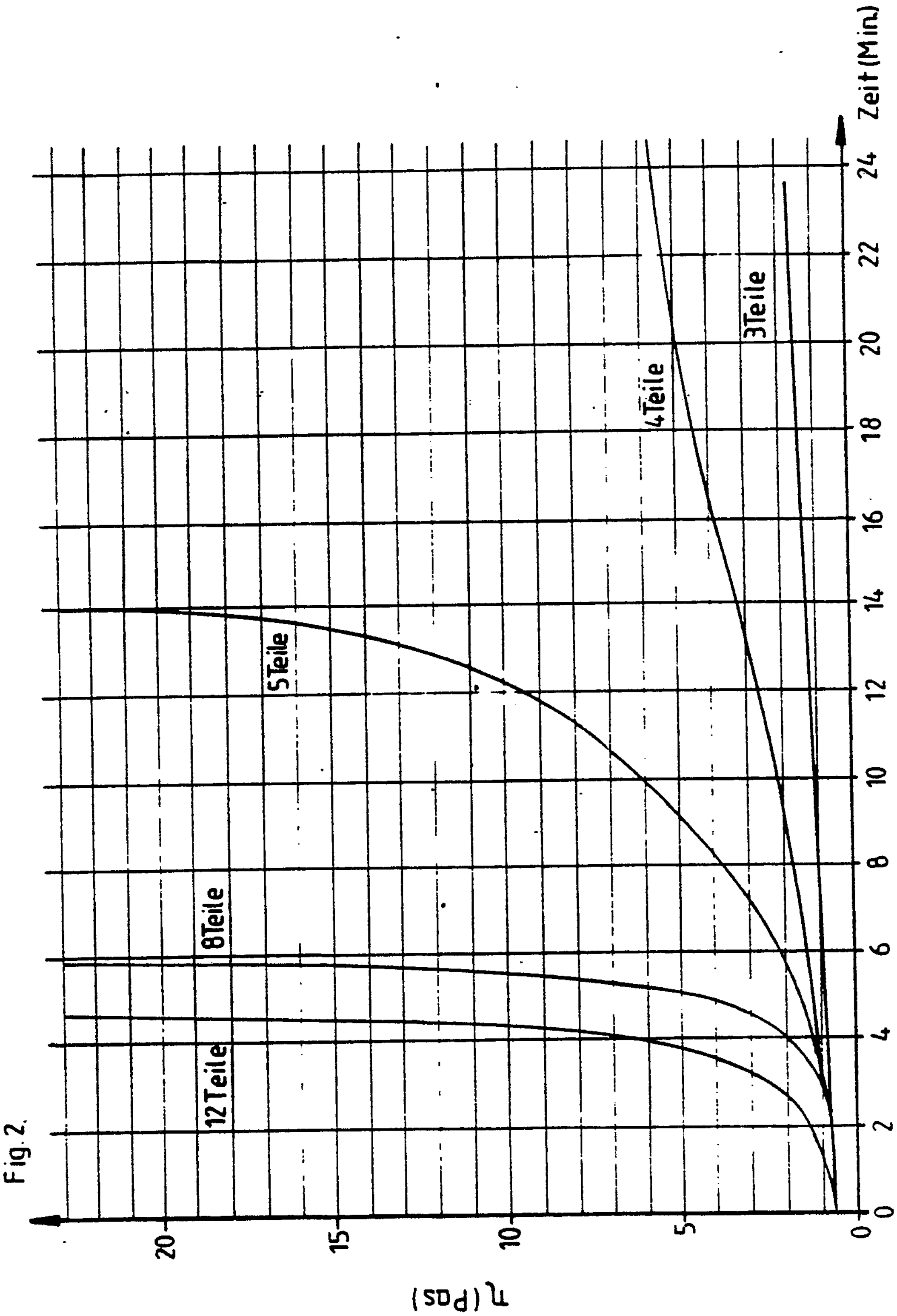
Zeit (Min.)
η (Pas)
0
2
4
6
8
10
12
14
16
18
20
22
24
0
5
10
15
20
3Teile
4Teile
5Teile
8Teile
12Teile

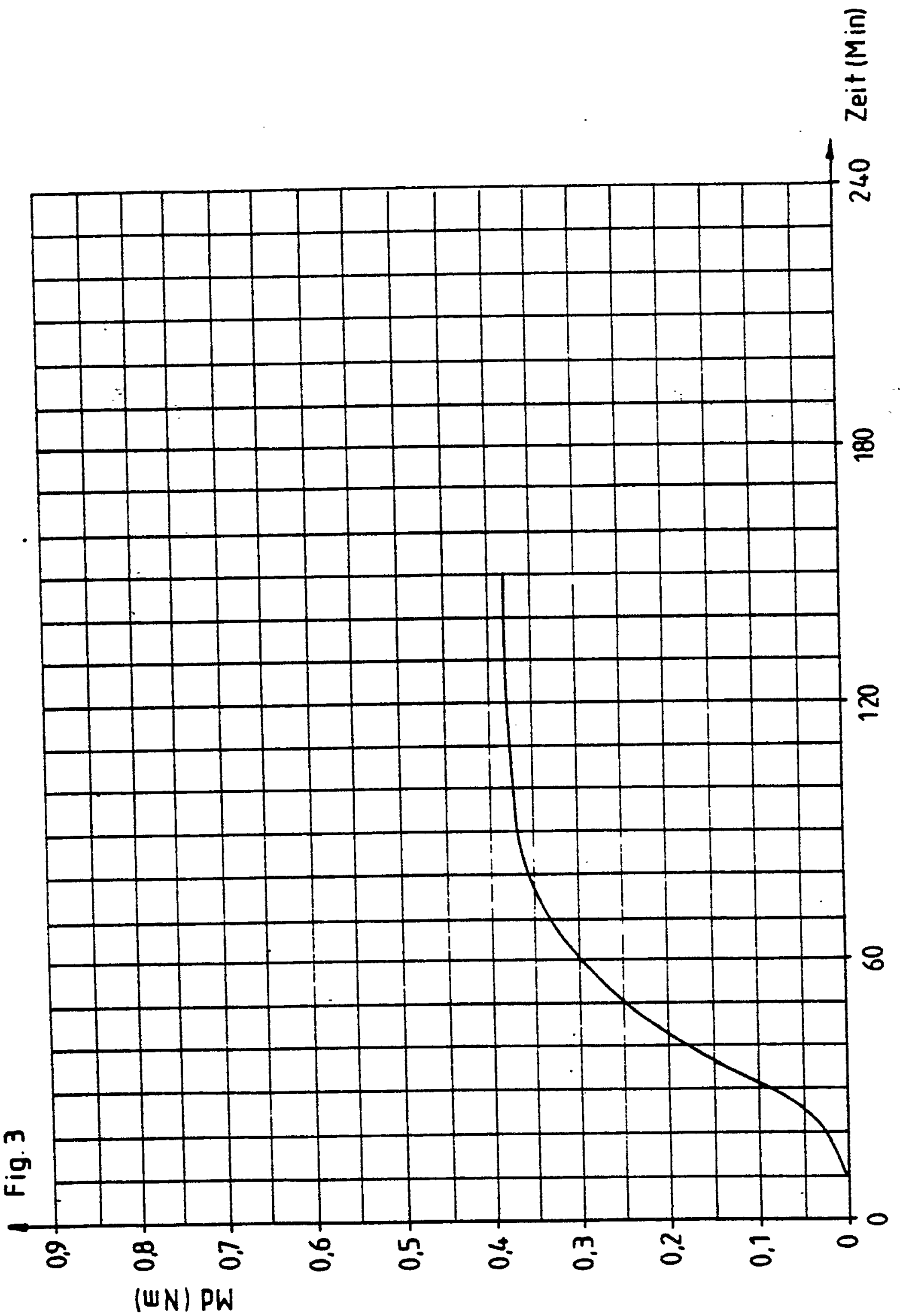


Fig. 3